# EUROPEAN PATENT APPLICATION

(11) **EP 2 018 060 A1**
(43) Date of publication of application: **21.01.2009**
(21) Application number: 07465004.5
(22) Date of filing: 19.07.2007
(51) Int. Cl.: H04N 7/173, H04N 5/445, G06F 17/30

(54) **Method for retrieving content accessible to television receiver and system for retrieving content accessible to television receiver**

(71) Applicant: ADVANCED DIGITAL BROADCAST S.A., 1218 Grand-Saconnex (CH)
(72) Inventor: Lazarski, Wojciech, 65-001, Zielona Gora (PL); Gajda, Marcin, 68-219, Tuplice (PL)
(74) Representative: Hudy, Ludwik

(57) **Abstract**

In a system for retrieving content accessible to a television receiver (101) communicating with at least one search engine enable to retrieve the content accessible to a television receiver (101), a content service manager (120) configured to receive a content service display request for a chosen content service identifier comprises a query combiner configured to generate a combined query by combining a current user interest query with a service query assigned to the requested service identifier, a search engine interface configured to send the combined search query to the search engine and receive content search results from the search engine as well as a content presenter configured to present the content search results to the user.

## Description

The present invention relates to a method for retrieving content accessible to a television receiver and system for retrieving content accessible to the television receiver.

One advantage of television receivers is the ease in which users can select a program of interest. Television programs are grouped into channels, and many channels are oriented towards a particular group of viewers or a particular topic. For example, some television channels include programming only for children, for teenagers or for elder people. Other channels include particular types of programming, such as comedies, action movies or romance films. There are also television channels related to specific areas of interest, such as nature channels, science channels, music channels or sports channels. Such thematic arrangement of programs in television channels allows the user to easily find a program of interest.

Recent advances in television receivers, such as digital television set-top boxes or multimedia home centers, made it possible for Internet and user-own content to be retrieved and presented on the screen of a television set. Large amount of content, available especially in the Internet, requires use of search engines in order to find a particular kind of content. A search engine receives a search query and returns content search results corresponding to the query. The search query may specify a number of parameters, such as keywords, date of creation of content, type of content, rating, quality, size etc.

However, searching for a particular content can be a challenge, especially for an inexperienced user. The quality of search results, namely their match with user expectations, strongly depends on the construction of the search query. Inexperienced users may find it difficult to construct appropriate queries, leading to search results expected by the user.

Therefore, there exists a need to provide a user interface for a television receiver for retrieving content, with reduced requirements for constructing a search query and providing a television-like experience to the user.

According to the invention, a method for retrieving content accessible to a television receiver comprises the steps of: defining a plurality of content services having assigned a service query defining a first set of content search parameters and defining a current user interest query defining a second set of content search parameters as well as, upon receiving a content service display request, creating a combined query by combining the current user interest query with a service query assigned to the requested content service, sending the combined query to a search engine, receiving content search results from the search engine and presenting the content search results to the user.

The content services can form a sub-collection of television channels of the television receiver.

Preferably, the content search results include a number of content items and the content items are presented as a series, where each content item is presented for a period of time.

It is advantageous when a content service is defined by receiving a query from a user of the television receiver and/or from an external source and assigning the received query to a content service identifier as a service query.

It is favorable that the current user interest query is defined by receiving an input from a user of the television receiver and creating the current user interest query on the basis of the received input and/or by extracting information from descriptors of currently watched television content and creating the current user interest query on the basis the extracted information and/or by extracting information from user profile and creating the current user interest query using the extracted user profile information and/or by receiving data from external source and creating the current user interest query on the basis of the received external source data.

It is also favorable that the first set of content search parameters defined by the service query includes at least one parameter describing a name, a keyword, a search engine, a date, a content type, a rating, a quality or a size.

The second set of content search parameters defined by the current user interest query can include at least one parameter describing a name, a keyword, a search engine, a date, a content type, a rating, a quality or a size.

In addition, the idea of the invention is a computer program comprising program code means for performing all the steps of the method described above when said program is run on a computer.

Furthermore, the idea of the invention is a computer program product stored on a computer usable medium comprising computer readable program means which, when executed, causes a computer to perform all of the steps of the method described above.

The idea of the invention is also a system for retrieving content accessible to a television receiver configured to communicate with at least one search engine, which comprises a content service identifiers collection configured to store service queries assigned to content service identifiers, the service queries defining a first set of content search parameters, a current user interest query container configured to store a current user interest query defining a second set of content search parameters, as well as a content service manager configured to receive a content service display request for a chosen content service identifier. The content service manager of this system comprises in turn a query combiner configured to generate a combined query by combining the current user interest query with a service query assigned to the requested service identifier, a search engine interface configured to send the combined search query to the search engine and receive content search results from the search engine and a content presenter configured to present the content search results to the user.

The invention will now be described by way of an example and with reference to the accompanying drawings in which:
Fig. 1 shows a structure of a television receiver according to the invention;
Fig. 2 shows a detailed structure of a content service manager;
Fig. 3 shows a first exemplary structure of a service ID collection for television channels and content services;
Fig. 4 shows a second exemplary structure of a service ID collection for television channels and content services;
Fig. 5 shows an exemplary structure of a service query definition as pseudocode;
Fig. 6 shows a flow chart of a procedure of operation of the content service manager;
Fig. 7 shows an example of a number of defined service queries; and
Fig. 8 shows an example of a service browser.

The present invention solves the problem of retrieving Internet content in a television receiver by defining a plurality of content services, each content service having assigned a service query. The service query defines service-specific content search parameters of content to be presented upon selection of the particular content service. Upon selection of a content service, the service query assigned to the selected content service is read and combined with a current user interest query to generate a combined search query. The combined search query is sent to a search engine and content search results returned by the search engine are presented to the user as the selected content service. Therefore, the user having specified his search preferences as the current user interest query may view different selections of content search results related to the current interest query on different channels, which results in a television-like experience while viewing Internet content.

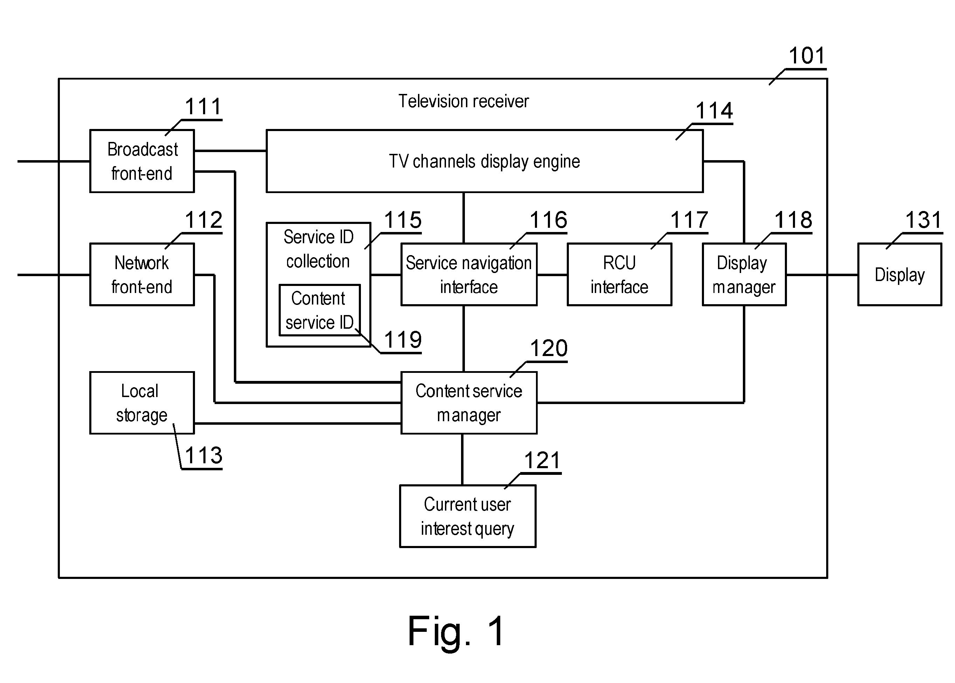

Fig. 1 presents a structure of a television receiver 101 with a system according to the invention. The television receiver 101 can be a stand-alone set-top box, a multimedia home center with TV reception functionality, a set-top box integrated with a television set or another device with TV reception functionality, such as a mobile phone or a personal digital assistant (PDA). The television receiver 101 has one or more content sources 111, 112, 113, allowing reception of television programming and access to search engines. One content source can be a broadcast front-end 111 for receiving broadcast data from satellite, cable or terrestrial television network. The received broadcast data may include television channels as well as additional content, such as Internet content transmitted by a broadcast operator. Another content source can be a network front-end 112 for communicating with a local or wide area network, enabling access to Internet or other types of networks via which external search engines can be communicated. A further content source can be a local storage 113, such as a hard disk or a nonvolatile memory module, for storing content received from broadcast front-end or network front-end, or from external devices connectable to the set-top box, such as digital cameras, or generated by the user within the set-top box.

The television receiver 101 comprises a TV channels display engine 114, for receiving, decoding and descrambling television streams from at least one of the content sources. The TV channels display engine 114 is controllable by a remote control unit (RCU), which is communicated via a RCU interface 117. The RCU may have the form of a standard television remote controller with numerical and functional keys, or a form of a keyboard, a touch pad device, a voice input device, a three-dimensional navigation device or other form, suitable for control of the television receiver 101. The RCU allows selection of a particular service by numerical keys and navigation through services by channel change keys (CH+/CH-). The output of the TV channels display engine 114 is fed to a display manager 118. The display manager 118 controls generation of both visual and audio data, which is sent to an audiovisual display 131, such as a television set, or to a set of a separate display screen and loudspeaker arrangement.

The system according to the invention comprises a content service manager 120 operable to receive a request for display of a content service, generate a combined search query from a service query assigned to the requested content service and a current user interest query, communicate with a search engine and present content search results to the user. The content service manager 120 can be a separate hardware block or can be implemented as software operable by a processor of the television receiver.

Different search engines may be communicated to retrieve content from different sources, for example Internet content, operator-generated broadcast content or user-own content stored locally. The search engines may provide content search results in a number of ways. The search results may be provided as a simple list, containing a list of locators of content items. The search results may be also provided together with information describing their method of presentation, such as a HTML page specifying the arrangement of search results on the screen. Individual content items may have a form of text, images, audio or video clips and their variations, such as tables, graphs or multimedia objects.

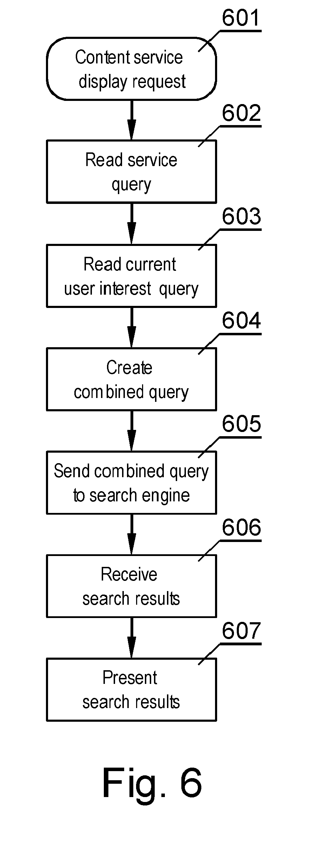

The content service manager 120 communicates with search engines in order to initiate a combined query and to present content search results returned for the combined query. The detailed operation of the content service manager 120 is described in details in Fig. 6. In general, the content service manager 120 is configured to receive a content service display request, and to create a combined search query by combining the current user interest query with a service query assigned to the requested content service identifier, send the combined query to a search engine, receive content search results from the search engine and present the content search results to the user.

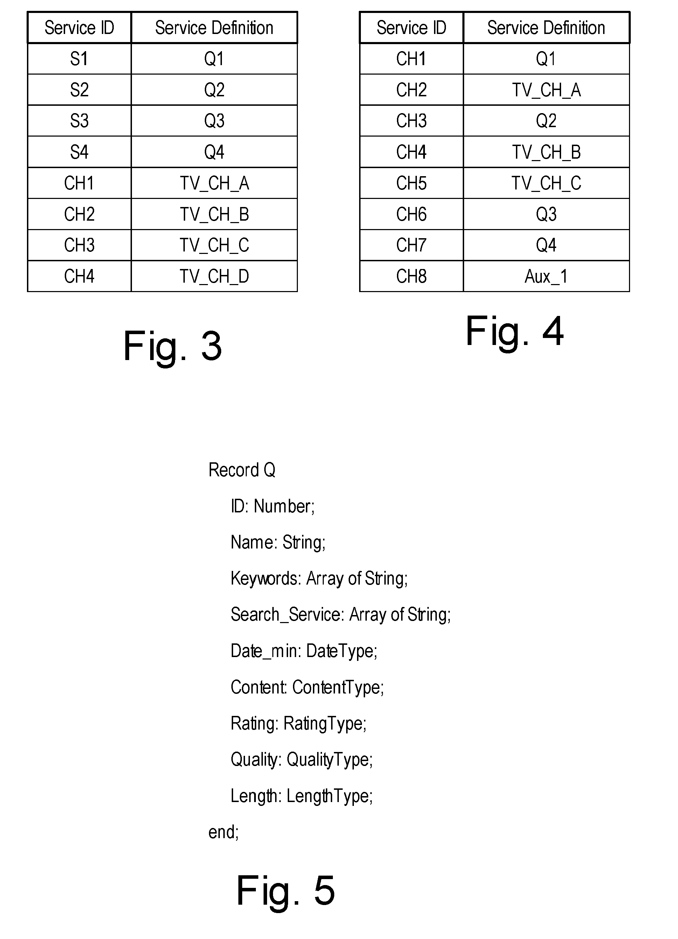

Content services are defined in a content service identifiers collection 119. The collection 119 stores content service identifiers and service queries assigned to each content service identifier. The content service identifiers may form an individual collection of identifiers, as shown in Fig. 4, or may form a sub-collection of television channel identifiers of the television receiver 101, as shown in Fig. 5. The user may input service navigation requests via the RCU, by selecting a particular service identifier number or by a channel change input. An exemplary format of a service query is presented in Fig. 6.

In one embodiment, a content service is defined by receiving a query from a user of the television receiver and assigning the received query to a content service identifier as a service query. This allows experienced users to adjust the content services to their needs.

In another embodiment, a content service is defined by receiving a query from an external source and assigning the received query to a content service identifier as a service query. This allows the broadcast operator or a network service operator to define content services for inexperienced users.

A current user interest query is stored in a current user interest query container 121. The current user interest query may have the same format as the service query format shown in Fig. 6, or a different format, with smaller or larger number of fields. The current user interest query defines a second set of content search parameters, which complements the first set of search parameters defined by a service query when the queries are combined into a combined query. For example, the set of content search parameters defined by the current user interest query may contain only one parameter, namely "Keywords".

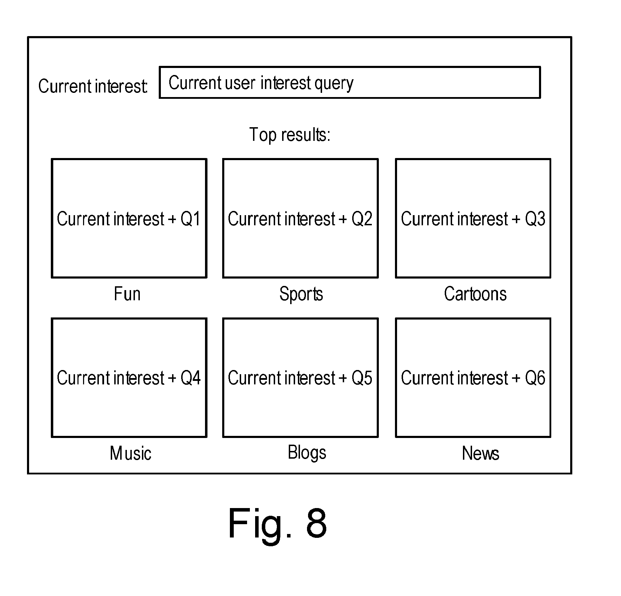

In one embodiment, the current user interest query is defined by receiving an input from the user of the television receiver and creating the current user interest query on the basis of the received input. For example, the user can manually define, via the RCU, a list of keywords representing user interest, as shown in Fig. 8.

In another embodiment, the current user interest query is defined by extracting information from descriptors of currently watched television content and creating the current user interest query on the basis of the extracted descriptor information. Various descriptors can be used, depending on the received type of television content. Descriptors of the currently received television channel, program or a fragment of a program, such as a scene or an advertisement, can be used. For example, in case the received television content is an MPEG/DVB stream, the descriptors are available in the Event Information Table (EIT). For example, the current user interest query can be created by inputting the title of the currently watched program extracted from the Event Information Table. Then, the user can switch to content service to watch specific types of content related to this title, such as news or music.

In yet another embodiment, the current user interest query is defined by extracting information from the user profile and creating the current user interest query using the extracted profile information. The user profile may contain information entered by the user manually, or information collected by a profile monitoring system over time, by monitoring typical user activity. For example, names of user favorite actors can be extracted from the user profile and entered as the keywords of the current user interest query.

Alternatively, the current user interest query is defined by receiving data from external source and creating the current user interest query using the received external source data. The external source data can be provided by a broadcast operator or by an external network service provider, in order to present the user with suggestions of content to watch.

Service navigation requests are handled by a service navigation interface 116, controllable by the RCU. The request input to the RCU is transmitted to the service navigation interface 116 via the RCU interface 117. In case the content service identifiers form an individual collection of identifiers, the service navigation requests input via the RCU are transferred either to the TV channels display engine 114 or to the content service manager 120, depending on whether the mode of operation is set to television channels or to content services. In case the content service identifiers form a sub-collection of television channel identifiers of the television receiver, the search navigation interface identifies the type of selected service and sends a request to display a service either to the television channels display engine or to the content service manager.

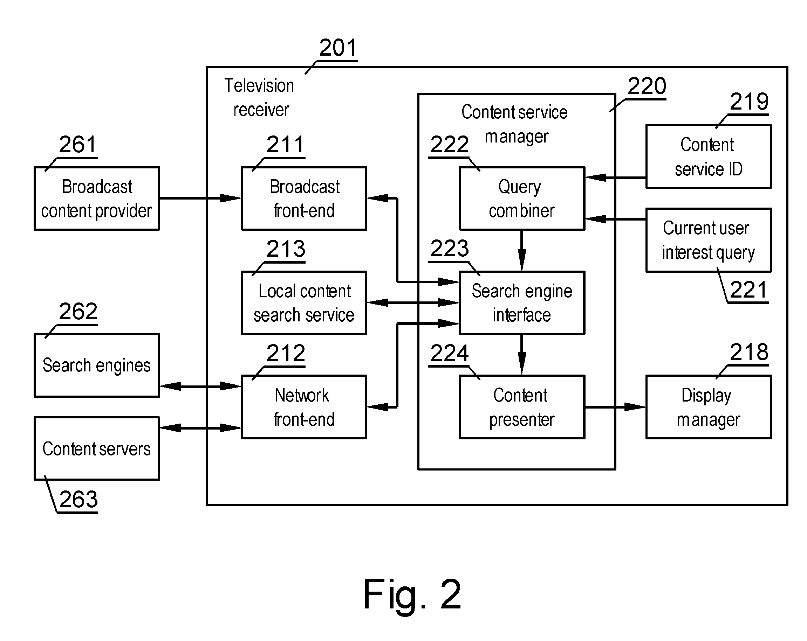

Fig. 2 shows a detailed structure of a content service manager 220 according to one embodiment of the invention, in which the whole functionality of the content service manager 220 is embedded in the television receiver 201.

The content service manager 220 comprises a query combiner, which combines a service query with a current user interest query to generate a combined query. The combination includes reading all parameters of the service query and current user interest query and joining them. For example, the "Keywords" fields can be joined with an "AND" operator, which will cause the search engine to return content search results containing keywords of the current interest query and of the service query. In case a specific search engine is specified by the query, the query combiner may further re-format the query into a specific syntax characteristic for the particular search engine.

The combined query is sent from the query combiner to a search engine interface 223, which communicates with at least one search engine. It may communicate with a broadcast front-end 211 to receive content from a broadcast content provider 261 matching the combined query. It may communicate with a local content search engine 213 to search content available offline at the television receiver or devices connected to it, such as digital cameras or other home network devices. The search engine interface 223 may also communicate with external search engines 262 via a network front-end 212, in order to find content from external content servers 263. The search engine interface sends the combined query to the search engine specified by the query or, if the query does not contain any specified search engine, to a default one or more search engines, for example to one or more external search engines 262.

The content search results returned by the search engine are sent to the content presenter 224. The content presenter 224 may present the content search results via the display manager 218 in a form directly specified by the search engine. In case the content search results are returned in a standardized form, such as a web page, they can be presented using a standard web browser application if such application is available as one of the software components of the television receiver. Alternatively, the content presenter may extract only partial information from the content search results and present it in its own way.

For example, the content search results can be presented as a series of content items, where each content item is displayed for a period of time. In case of content having an audio or video form, the period of presenting each content item can equal the length of the audio or video clip, or a predefined period of time, for example ten seconds, to present only a preview of each content item. In case of content having a text form, the period of time of presentation may depend on the amount of the text to be presented, for example one second for each word. In case of content having a graphic form, the period of time of presentation may be predefined to a specific value, for example ten seconds. Furthermore, for all types of content, the period of time of content presentation may be selected individually for each content item by comparing content metadata and user preferences, so as to display content matching user preferences for a longer time than content unrelated to user preferences. Presenting content in such a way allows the user to view the content search results in a passive way, namely without the need to use the remote controller to navigate between individual content items, which results in a viewing experience similar to viewing a typical television channel.

Alternatively, the functionality of the content service manager can be implemented outside the television receiver, in a remote server. Then, the communication between the service navigation interface and the content service manager is implemented using a network communication protocol.

Fig. 3 presents an exemplary structure of a service ID collection 115 for television channels and content services, where content services have assigned service identifiers which form a list of identifiers separate from the channel list of the television set. In that case, the operation of the service navigation interface depends on the mode of operation of the television receiver - a content services mode, in which content services are displayed or a TV channels mode, in which TV channels are displayed. Navigation via channel change buttons of the RCU effects in navigation only within the currently active type of services, namely content services or television channels. Service identifiers S1 to S4 have assigned service queries Q1 to Q4. Service identifiers CH1 to CH4 are assigned to TV channels TV_CH_A to TV_CH_D.

Fig. 4 presents an exemplary structure of a service ID collection 115 for television channels and content services, where service identifiers of content services form a subset of channel identifiers of the television receiver. In that case, the service interface upon request for service display reads service definition and sends request for service display either to the TV channels display engine or to the content service manager. Service identifiers CH1, CH3, CH6 and CH7 have assigned service queries Q1, Q2, Q3 and Q4, respectively. Service identifiers CH2, CH4 and CH5 are assigned to television channels TV_CH_A, TV_CH_B and TV_CH_C, respectively. Service identifier CH8 is assigned to an auxiliary input, which can be handled by the TV channels display engine or other block of the television receiver.

Fig. 5 presents an exemplary structure of a service query definition as pseudocode. The service query comprises a number of fields, defining a set of content search parameters, including:
- an "ID" field specifying a query identifier;
- a "Name" field specifying a name of the service query, which can be displayed in a program guide or other applications to identify a particular content service;
- a "Keywords" field specifying a set of keywords related to the particular content service;
- a "Search_Service" field specifying one or more search engines from which content should be searched for the particular content service;
- a "Date_min" field specifying the earliest date of content creation to be presented, in order to limit the content to only new content;
- a "Content" field specifying the type of content to be displayed and its parameters, for example audio, video, text or graphical content, and parameters such as compression method;
- a "Rating" field specifying the minimum rating of content to be displayed, to allow only highest-rating content on a particular service;
- a "Quality" field specifying the minimum quality of content to be displayed, for example High-Definition content only;
- a "Size" field specifying the minimum size of content, for example a number of pixels for a graphical content, a number of words for text content, or number of seconds for audio or video content.

In other embodiments, the service query contains at least one field of the fields described above, not including the "ID" and "Name" fields. In a particular embodiment, the service query contains only the "keywords" field. Therefore, in a particular embodiment the set of content search parameters can include only one search parameter.

Fig. 6 presents a procedure of operation of the content service manager. The procedure starts upon receiving a content service display request in step 601. In step 602, a service query assigned to the requested content service is read from the data previously defined in the content services identifiers container. In step 603, a current user interest query, previously defined and stored in the current user interest query container, is read. Alternatively, in case the current user interest query was not defined before the content service is selected, it can be defined in step 603. Next, in step 604, the query combiner 222, shown in Fig. 2, creates a combined query by combining the service query and the current user interest query. Upon creating the combined query, individual fields of the service query and the user interest query are connected with "AND" operator. In addition, the query combiner may adapt the query format to a format required by a particular search engine, to which the query will be sent. In step 605 the search engine interface 223 sends the combined query to one or more search engines. In step 606 the content search results returned by the search engines are received and presented by the content presenter 224 in step 607.

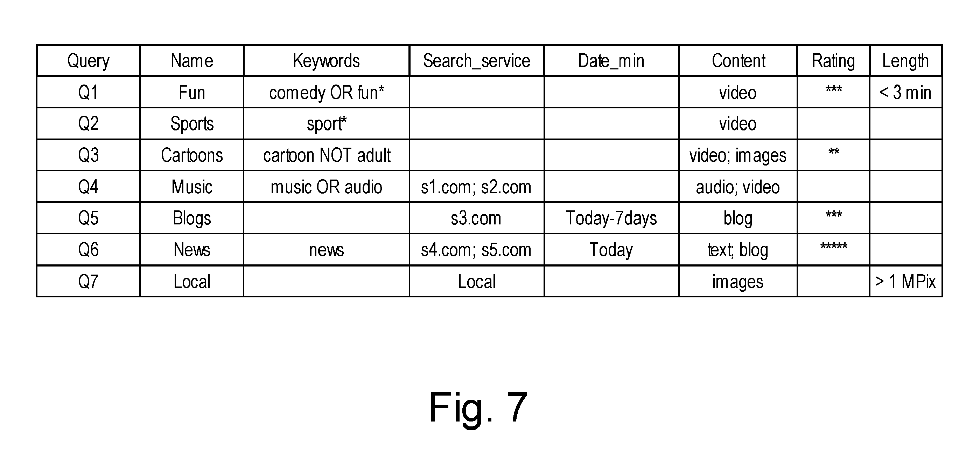

Fig. 7 presents an example of a number of defined service queries Q1 to Q7 in a form of a table. Query Q1 is related to short comedy video clips, having at least moderate rating, identifiable by keywords "comedy OR fun*". Query Q2 is related to sports video clips, identifiable by a keyword "sport*". Query Q3 is related to cartoon video clips or pictures, having at least a "**" rating, identifiable by keywords "cartoon NOT adult", in order to return cartoon content for children. Query Q4 is related to musical audio and video clips from search engines "s1.com" and "s2.com", identifiable by keywords "music OR audio". Query Q5 is related to blog content from search engine "s3.com", not older than 7 days and having at least moderate rating. Query Q6 is related to news texts and blogs from services "s4.com" or "s5.com", published at the same day the search is made and having only the highest rating, identifiable by keyword "news". Query Q7 is related to all images from local storage having size greater than 1 Megapixel.

Fig. 8 presents an example of a service browser, presenting a number of content service previews as a mosaic. When a user enters a current user interest query, each mosaic window presents content corresponding to a combined query, created by combining the current user interest query with a service query specific to a particular content service. Each mosaic window may present the first content item from the content search results for a particular content service, or may present the content items of the content search results in a form of a slideshow.

In the example shown in Fig. 8, the current user interest query is configured to store keywords only. In case the user entered "football OR soccer" as the current interest query, the combined query for content service to which query Q1 (as shown in Fig. 7) is assigned would be:

```
 Combined_Query =
  Keywords = (football OR soccer) AND (comedy OR fun)
  Content = video
  Rating = ***
  Length < 3 min
 end;
```

Such query, when executed, would cause the search engine to return content search results related to video clips shorter than 3 minutes, with at least moderate ranking, containing football or soccer entertaining content.

Alternatively, the combined query for content service to which query Q2 (as shown in Fig. 7) is assigned would be:

```
 Combined_Query =
  Keywords = (football OR soccer) AND sport*
  Content = video
 end;
```

Such query, when executed, would cause the search engine to return content search results related to video clips containing football or soccer sporting events.

While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention.

## Claims

1. A method for retrieving content accessible to a television receiver, comprising the steps of:
- defining a plurality of content services having assigned a service query defining a first set of content search parameters ;
- defining a current user interest query defining a second set of content search parameters ;
- upon receiving a content service display request,
- creating a combined query by combining the current user interest query with a service query assigned to the requested content service,
- sending the combined query to a search engine,
- receiving content search results from the search engine and
- presenting the content search results to the user.

2. The method of claim 1, wherein the content services form a sub-collection of television channels of the television receiver.

3. The method of claim 1, wherein the content search results include a number of content items and the content items are presented as a series, where each content item is presented for a period of time.

4. The method of claim 1, wherein a content service is defined by receiving a query from a user of the television receiver and assigning the received query to a content service identifier as a service query.

5. The method of claim 1, wherein a content service is defined by receiving a query from an external source and assigning the received query to a content service identifier as a service query.

6. The method of claim 1, wherein the current user interest query is defined by receiving an input from a user of the television receiver and creating the current user interest query on the basis of the received input.

7. The method of claim 1, wherein the current user interest query is defined by extracting information from descriptors of currently watched television content and creating the current user interest query on the basis of the extracted information.

8. The method of claim 1, wherein the current user interest query is defined by extracting information from user profile and creating the current user interest query on the basis of the extracted user profile information.

9. The method of claim 1, wherein the current user interest query is defined by receiving data from external source and creating the current user interest query using the received external source data.

10. The method of claim 1, wherein the first set of content search parameters defined by the service query includes at least one parameter describing a name, a keyword, a search engine, a date, a content type, a rating, a quality or a size.

11. The method of claim 1, wherein the second set of content search parameters defined by the current user interest query includes at least one parameter describing a name, a keyword, a search engine, a date, a content type, a rating, a quality or a size.

12. A computer program comprising program code means for performing all the steps of the method of claims 1-11 when said program is run on a computer.

13. A computer program product stored on a computer usable medium comprising computer readable program means which, when executed, causes a computer to perform all of the steps of the method of claims 1-11.

14. A system for retrieving content accessible to a television receiver (101) configured to communicate with at least one search engine, **characterised in that** comprises
- a content service identifiers collection (119) configured to store service queries assigned to content service identifiers, the service queries defining a first set of content search parameters;
- a current user interest query container (121) configured to store a current user interest query defining a second set of content search parameters;
- a content service manager (120) configured to receive a content service display request for a chosen content service identifier, comprising
- a query combiner (222) configured to generate a combined query by combining the current user interest query with a service query assigned to the requested service identifier,
- a search engine interface (223) configured to send the combined search query to the search engine (262) and receive content search results from the search engine (262),
- a content presenter (224) configured to present the content search results to the user.
